# FASCICULE DE BREVET EUROPEEN

(11) **EP 2 862 091 B1**
(45) Date de publication et mention de la délivrance du brevet: **02.08.2017**
(21) Numéro de dépôt: 13737319.7
(22) Date de dépôt: 14.06.2013
(51) Int. Cl.: G06F 17/30, H04L 29/08, H04L 29/06, G06F 13/38

(54) **DISPOSITIF ET PROCEDE D'EXTRACTION DE DONNEES SUR UN BUS DE COMMUNICATION D'UN VEHICULE AUTOMOBILE**
VERFAHREN UND VORRICHTUNG ZUR DATENEXTRAKTION IN EINEN KOMMUNIKATIONSBUS EINES FAHRZEUGES
APPARATUS AND METHOD OF EXTRACTING DATA IN A COMMUNICATION BUS OF A VEHICLE

(30) Priorité: 15.06.2012 FR 1255606
(43) Date de publication de la demande: 22.04.2015
(73) Titulaire: Orange, 75015 Paris (FR)
(72) Inventeur: RENAC, Paul, 22300 Rospez (FR); ESCRIEUT, Pierre, 31320 Pechbusque (FR)
(74) Mandataire: Regimbeau
(86) Numéro de dépôt international: PCT/FR2013/051399
(87) Numéro de publication internationale: WO 2013/186504

(56) Documents cités:
- US-A1- 2010 180 003
- "Sierra M6-1 SAS/SATA Protocol Analyser User Manual", Lecroy Corp. 3385 Scott Blvd Santa Clara CA 95054 , 1 March 2012 (2012-03-01), pages 1-314, Retrieved from the Internet: URL:http://cdn.teledynelecroy.com/files/ma nuals/sierra_m6-1_usermanual_v4.30.pdf [retrieved on 2016-09-05]

## Description

### DOMAINE TECHNIQUE GENERAL

La présente invention concerne le domaine technique des systèmes et procédés permettant l'extraction et le traitement de données transmises sur un bus de communication d'une machine - tel qu'un bus système série de type CAN (acronyme de l'expression anglo-saxonne « Control Area Network ») d'un véhicule.

### PRESENTATION GENERALE DE L'ART ANTERIEUR

Les calculateurs électroniques intégrés et utilisés dans un véhicule automobile (calculateur moteur, calculateur de freinage etc....) sont interconnectés entre eux par un réseau ou bus de communication.

En pratique, une pluralité de calculateurs du véhicule sont raccordés à un même bus de communication et émettent des informations sur ce bus de communication à tour de rôle. Ceci permet de limiter la quantité de câbles de communication utilisés dans un véhicule.

A l'heure actuelle, la majorité des véhicules automobiles utilisent la même technologie pour échanger des informations entre ces calculateurs embarqués : le bus CAN (« Control Area Network »).

Le bus CAN est une technologie de réseau industriel (dit aussi « de terrain ») et répond par sa technologie, aux contraintes d'environnement d'une automobile en matière de fiabilité des échanges de données en environnement perturbé.

Toutefois, à l'heure actuelle, la partie « applicative » - c'est-à-dire le format, le codage et la signification des données transportées sur un bus CAN - n'est pas standardisée, de sorte que chaque concepteur de l'ingénierie et de l'architecture des systèmes électroniques embarqués dans les automobiles propose un format, un codage et une signification différente pour une même donnée.

Par exemple si l'on considère une donnée représentative de la vitesse de déplacement d'un véhicule :
- pour un premier modèle de véhicule, cette donnée sera :
   ∘ émise sur la trame n°1 du bus CAN,
   ∘ dénommée « speed »,
   ∘ codée sur quatre octets,
   ∘ exprimée en mètre par seconde, alors que
- pour un deuxième modèle de véhicule, cette donnée sera :
   ∘ émise sur la trame n°12 du bus CAN,
   ∘ dénommée « vit. »,
   ∘ codée sur deux octets,
   ∘ exprimée en kilomètre par heure.

Ainsi, le codage des données transportées par un bus CAN - codage usuellement appelé « Messagerie CAN » - est propre et spécifique à chaque constructeur et à chaque modèle de véhicule.

L'absence de standardisation des messageries CAN oblige les fournisseurs de solutions télématiques à développer des solutions logicielles spécifiques par modèle de véhicule.

Par ailleurs, la quantité de données circulant sur les messageries CAN est de plus en plus importante du fait de l'augmentation croissante du nombre de calculateurs embarqués dans un véhicule. Il devient donc très difficile d'extraire l'ensemble des informations circulant sur le bus CAN et de transmettre cet ensemble d'informations vers un serveur distant. Ceci oblige les fournisseurs de solutions télématiques à développer des solutions logicielles spécifiques en fonction de l'application finale visée.

On comprend alors que le développement de solutions logicielles est long et coûteux du fait de la multiplicité de modèles de véhicules d'une part et de la multiplicité d'applications finales d'autre part.

Il existe un besoin de proposer un dispositif et un procédé d'extraction de données permettant de faciliter le développement de solutions logicielles génériques destinées aux machines comportant un bus de communication, tout en limitant la quantité de données extraites de ce bus.

Le document "Sierra M6-1 SAS/SATA Protocol Analyser User Manual", Lecroy Corp., mars 2012, pages i, ii, 13, 14, 16-23, 27-29, 37-43, 53, 215 extrait de l'Internet URL: http://cdn.teledynelecroy.com/files/manuals/sierra_m6-1_usermanual_v4.30.pdf décrit un procédé d'extraction tel que spécifié dans le préambule de la revendication 1.

### PRESENTATION DE L'INVENTION

L'invention répond à ce besoin en proposant un procédé d'extraction d'au moins une donnée utile circulant sur un bus de communication d'une machine tel que défini dans la revendication indépendante 1. Les applications d'un tel procédé concernent notamment :
- les services de gestion de flotte (ou « fleet management » selon la terminologie anglo-saxonne),
- les services de type « payez selon votre conduite » (ou « pay as you-drive » selon la terminologie anglo-saxonne) pour les assurances, ou encore
- des services d'auto-partage pour véhicules (thermiques, électriques,...).

Plus largement, tous les acteurs du monde des transports automobiles peuvent tirer parti d'applications automobiles basées sur la « communication de machine à machine » (ou « M2M », acronyme de l'expression anglo-saxonne « machine to machine »), comme par exemple les services de télédiagnostic du véhicule, etc.

La réception et l'analyse d'un fichier de configuration permettent une adaptation automatique de l'étape de collecte. En effet :
- au lieu d'une étape de collecte dédiée à un unique format de codage des données, l'invention propose la mise en oeuvre d'une étape de collecte configurable en fonction du format de codage des données circulant sur le bus de communication :
   ceci permet d'adapter le procédé d'extraction à n'importe quel modèle de véhicule ;
- au lieu d'une étape d'extraction figée ne permettant que d'extraire un jeu de données prédéterminé, l'invention propose la mise en oeuvre d'une étape d'extraction dans laquelle la nature des données à extraire est paramétrable,
   ceci permet d'adapter le procédé d'extraction à tout type d'application finale visée ;
- au lieu d'une étape d'extraction indifférenciée permettant l'extraction de l'ensemble des données circulant sur le bus de communication, l'invention propose la mise en oeuvre d'une étape d'extraction sélective dans laquelle le nombre de données à extraire est ajustable ;
ceci permet de limiter la quantité de données extraites et transmises au serveur.

Ainsi, la combinaison des étapes de réception, d'analyse, de collecte et de transmission permettent l'obtention d'un procédé d'extraction de données générique (i.e. utilisable quels que soient le format de codage, le nombre et la nature des données à extraire) et dans lequel la quantité de données extraites est limitée aux besoins de l'application finale visée.

Des aspects préférés mais non limitatifs du système selon l'invention sont les suivants :
- l'étape d'analyse comprend l'acquisition d'une fréquence de collecte de ladite au moins une donnée utile, l'étape de collecte comprenant la collecte de ladite au moins une donnée utile à ladite fréquence de collecte,
   ceci permet de limiter la quantité de données utiles collectées aux besoins de l'application finale visée, et donc d'optimiser l'utilisation des ressources matérielles de la machine (espace mémoire nécessaire au stockage des données, bande passante associée aux communications entre la machine et le serveur distant, etc.) ;
- l'étape d'analyse comprend l'acquisition d'un facteur de conversion de ladite au moins une donnée utile, l'étape de collecte comprenant l'application dudit facteur de conversion à ladite au moins une donnée utile pour convertir ladite donnée dans une unité prédéterminée représentative d'une grandeur physique,
   ceci permet la transmission au serveur distant, de données utiles homogènes en unité quel que soit le type de machine sur lequel le procédé d'extraction est mis en oeuvre ;
- l'étape d'analyse comprend l'acquisition d'un critère de validité de ladite au moins une donnée utile, l'étape de collecte comprenant la comparaison de ladite donnée utile au critère de validité,
   ceci permet de ne transmettre au serveur distant que des valeurs plausibles de données utiles et ainsi d'optimiser l'utilisation de la bande passante entre la machine et le serveur en évitant l'encombrement de celle-ci par la transmission de données erronées ;
- l'étape d'analyse comprend :
   ∘ l'acquisition d'une pluralité de paramètres initiaux pour la configuration de l'étape de collecte, et
   ∘ le stockage desdits paramètres initiaux dans un emplacement mémoire local ceci permet de disposer, dans la machine, des informations nécessaires à l'extraction de données utiles, et donc d'optimiser l'utilisation des ressources matérielles d'une part, et d'accélérer la vitesse de traitement du procédé d'extraction d'autre part, notamment en évitant à la machine de rechercher ces informations dans une mémoire du serveur distant ;
- le procédé comprend en outre la réception d'un nouveau fichier de configuration pour mettre à jour la configuration de l'étape de collecte, et l'analyse du nouveau fichier de configuration, l'étape de collecte de donnée à partir du fichier de configuration initial étant exécutée en parallèle de l'étape d'analyse du nouveau fichier de configuration,
   ceci permet une adaptation dynamique du procédé d'extraction en fonction de l'évolution des besoins de l'application finale visée.

L'invention concerne également un procédé de génération d'un fichier de configuration pour le paramétrage d'un procédé d'extraction d'au moins une donnée utile circulant sur un bus de communication d'une machine, ladite au moins une donnée utile étant représentative d'un paramètre de la machine, le procédé de génération comprenant une étape de création du fichier de configuration à partir d'un fichier de données extractibles circulant sur le bus de communication, ladite étape de création du fichier de configuration comprenant la sélection de ladite au moins une donnée utile à extraire parmi l'ensemble des données extractibles du fichier de données extractibles. Le procédé de génération d'un fichier de configuration permet :
- de rendre le procédé d'extraction compatible avec n'importe quel type de machine,
- de limiter la quantité de données extraites en fonction de l'application finale visée.

Dans un mode de réalisation du procédé de génération, l'étape de l'étape de sélection comprend :
- le choix de ladite au moins une donnée utile à extraire parmi l'ensemble des données extractibles du fichier de données extractibles et
- l'affectation à ladite au moins une donnée utile choisie de critères d'homogénéisation pour standardiser le format de codage de ladite au moins une donnée utile choisie.

Ceci permet de standardiser le format de codage des données transmises au serveur distant.

L'invention concerne également un dispositif d'extraction d'au moins une donnée utile circulant sur un bus de communication d'une machine tel que défini dans la revendication indépendante 8. D'autres modes de réalisation de l'invention sont spécifiés dans les revendications dépendantes attenantes.

### PRESENTATION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 illustre schématiquement un exemple de procédé d'extraction de données,
- les figures 2 et 3 illustrent schématiquement des exemples de systèmes d'extraction de données.

### DESCRIPTION DE MODES DE REALISATION DE L'INVENTION

On va maintenant décrire plus en détail l'invention en référence aux figures, dans le cas particulier d'un bus de « réseau de zone de contrôleur » (ou bus « CAN », acronyme de l'expression anglo-saxonne « Controller Area Network ») d'un véhicule automobile. Dans ces différentes figures, les éléments équivalents portent les mêmes références numériques.

### 1. Procédé d'extraction

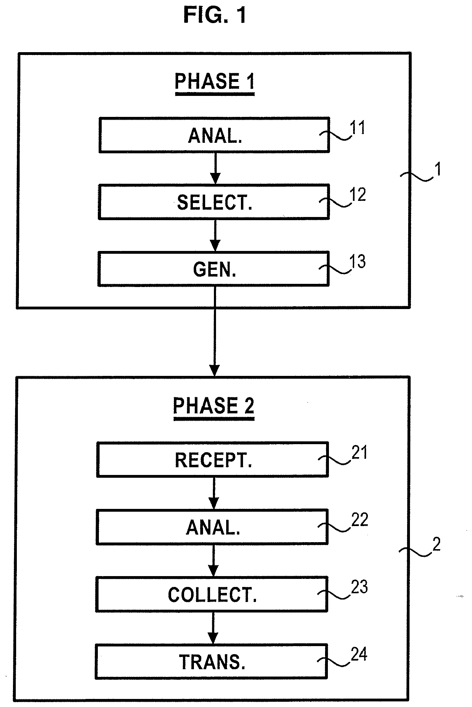

En référence à la figure 1, on a illustré un exemple de procédé d'extraction de données circulant sur un bus de communication de type CAN.

Le procédé comprend :
- une phase dite « hors ligne » 1, et
- une phase dite « en ligne » 2.

La phase « hors ligne » 1 permet de configurer le fichier de données à extraire par le procédé d'extraction, en fonction du modèle du véhicule et de l'application finale visée.

La phase « en ligne » 2 permet l'extraction de données utiles à l'application finale visée. Ces deux phases seront décrites plus en détail dans la suite.

### 1.1. Phase hors ligne

La phase « hors ligne » comprend :
- une étape d'analyse 11 des données circulant sur le bus de communication ; cette étape permet de créer un fichier de données extractibles,
- une étape de sélection 12 dans le fichier de données extractibles, de données utiles parmi la pluralité de données extractibles contenues ; cette étape permet de créer un fichier de données à extraire,
- une étape de génération 13 à partir du fichier de données à extraire, d'un fichier de configuration pour paramétrer le procédé d'extraction.

### 1.1.1. Etape d'analyse

Comme expliqué précédemment, chaque véhicule utilise son propre format de données pour structurer et codifier les paramètres du véhicule - tels que la vitesse de déplacement du véhicule, la quantité de carburant contenue dans le réservoir, etc. - dans les trames circulant sur le bus de communication.

La transmission vers un serveur des données brutes circulant sur le bus de communication nécessiterait un traitement extrêmement lourd au niveau du serveur.

L'étape d'analyse des données circulant sur le bus permet de limiter les ressources matérielles ou logicielles nécessaires au traitement des données circulant sur le bus de communication.

Le format de codage des données circulant sur le bus de communication peut être connu ou non.

Lorsque le format de codage est connu, celui-ci peut être défini sous différentes formes. Notamment, le format de codage utilisé pour un véhicule donné peut être défini sous la forme d'une structure de données stockée en mémoire.

En variante, le format de codage utilisé peut être défini sous la forme d'un fichier descripteur :
- au format « .SYM », format propriétaire de la société Peak- System, ou
- au format « .DBC », format propriétaire de la société « Vector ».

Dans ce cas, l'étape d'analyse peut comprendre une analyse sémantique automatique du fichier descripteur. L'analyse sémantique permet d'interpréter le contenu du fichier descripteur afin de produire les informations permettant d'identifier les données contenues dans le flux de trames circulant sur le bus CAN.

Pour chaque donnée représentative d'un paramètre du véhicule, l'analyse sémantique permet de définir :
- un identifiant de la trame qui transporte la donnée,
- un ou des pointeurs de cette donnée dans ladite trame,
- une longueur du champ utilisé pour coder cette donnée,
- un masque de lecture de la donnée,
- un offset, etc.

Lorsque le format de codage des données circulant sur le bus de communication est inconnu, l'étape d'analyse peut consister à faire varier les différents paramètres du véhicule l'un après l'autre, et à observer - éventuellement à l'aide d'un analyseur réseau - les variations des données dans les trames circulant sur le bus de communication.

Par exemple, lors de l'ouverture d'une portière du véhicule (les autres paramètres du véhicule restant constant), si les données contenues dans la trame d'identifiant 28 varient, alors la donnée représentative de l'ouverture de la porte est contenue dans cette trame d'identifiant 28. En répétant ces opérations pour chaque paramètre du véhicule (vitesse de déplacement, etc.), il est possible de définir le format de codage des données associé à chacun des paramètres du véhicule.

Dans tous les cas, l'étape d'analyse permet la production d'un fichier de données extractibles composé d'un ensemble de valeurs contenues dans un tableau mémorisable sous différentes formes de structure de données binaires (données en mémoire, fichier, base données).

### 1.1.2. Etape de sélection

Comme décrit ci-dessus, la quantité de données circulant sur le bus de communication d'un véhicule automobile est tellement importante qu'il est coûteux voire inutile d'extraire la totalité de ces données.

En effet, l'extraction et la transmission à un serveur distant de la totalité des données circulant sur un bus de communication peut induire :
- une saturation du canal de communication permettant la transmission des données extraites, notamment dans le cas où le canal de communication est un réseau à débit limité,
- un coût important des communications au travers du canal de communication, notamment dans le cas où le canal de communication est un réseau mobile,
- un engorgement du serveur du fait du nombre important de données à stocker et à traiter.

L'étape de sélection de données utiles dans le fichier de données extractibles permet de limiter la quantité de données à extraire en fonction de l'application finale visée.

L'étape de sélection peut comprendre une étape de choix des données à extraire parmi la pluralité de données extractibles, ainsi qu'une étape d'affectation de critères de collecte à chacune des données à extraire.

### 1.1.2.1. Etape de choix

L'étape de choix des données à extraire permet de définir un groupe de données à extraire. Ce groupe de données à extraire correspond à un sous ensemble contenu dans le groupe des données extractibles, ce qui limite la quantité de données à transmettre au serveur.

L'étape de choix peut être manuelle. Notamment, l'étape de choix peut être effectuée par un utilisateur via une interface homme/machine permettant à l'utilisateur d'élire une ou plusieurs données à extraire parmi l'ensemble des données extractibles du fichier de données extractibles.

En variante, l'étape de choix peut être automatique ou pilotée.

### 1.1.2.2. Etape d'affectation

L'étape d'affectation permet de standardiser le format de codage des données utiles choisies lors de l'étape de choix. Elle consiste à affecter différents critères à chacune des données utiles choisies. Ces critères sont par exemple :
- un libellé unique permettant de nommer de manière explicite, unique et homogène la donnée utile considérée quel que soit le modèle de véhicule ;
   par exemple, le libellé « Régime Moteur » sera affecté à la donnée utile représentative de la vitesse de rotation du moteur, le libellé « vitesse » sera affecté à la donnée utile représentative de la vitesse de déplacement du véhicule, etc.,
- un facteur de conversion d'unité pour restituer la donnée utile dans une unité unique et homogène ;
   par exemple, un facteur de conversion est appliqué à la donnée utile associée à la vitesse de déplacement du véhicule pour l'exprimer en kilomètres/heure et pas en mètres/seconde ou en miles/heure, un facteur de conversion est appliqué à la donnée utile associée à la consommation du véhicule pour l'exprimer en litres/100kilomètres et pas en mm3/s ou µl/s etc.,
- une périodicité de lecture de la donnée utile sur le bus de communication : cette périodicité permet d'adapter la fréquence de collecte d'une donnée en fonction de l'application finale visée, et ainsi de limiter la quantité de données extraites ;
   par exemple, une périodicité de 1/N peut être appliquée à une donnée utile afin de n'extraire qu'une valeur toutes les N valeurs de cette donnée utile,
- un critère de validité de la valeur représentée par la donnée utile : ce critère permet d'affecter des conditions de validité de la valeur de chaque paramètre acquis ; par exemple, le critère de validité peut correspondre à des valeurs seuil minimum et maximum pour une donnée utile associée à une température, etc.
   L'étape d'affectation peut être automatique ou manuelle. Dans ce cas, elle peut être réalisée par un utilisateur via une interface homme/machine permettant à celui-ci d'affecter des critères à chaque donnée utile.

Dans tous les cas, l'étape de sélection permet l'obtention d'un fichier de données à extraire composé d'un groupe de données utiles à la mise en oeuvre de l'application finale visée. Ce groupe de données utiles constitue un sous ensemble du groupe de données extractibles contenues dans le fichier de données extractibles.

### 1.1.3. Etape de génération

L'étape de génération permet de produire un fichier de configuration pour l'extraction des données utiles lors de la phase « en ligne ».

Avantageusement, le fichier de configuration peut comprendre des champs relatifs à :
- son nom,
- sa version,
- sa date de création,
- le nombre de données utiles à extraire, etc.

Ces informations additionnelles contenues dans le fichier de configuration permettent notamment une mise à jour à distance du procédé d'extraction.

Le format des autres informations contenues dans le fichier de configuration peut être identique au format des informations contenues dans le fichier de données à extraire.

Le fichier de configuration est ensuite utilisé lors de la phase « en ligne » pour permettre l'extraction des données utiles à la mise en oeuvre de l'application finale visée.

### 1.2. Phase en ligne

La phase « en ligne » 2 comprend :
- une étape de réception 21 du fichier de configuration,
- l'analyse 22 du fichier de configuration pour configurer (ou mettre à jour) une opération de collecte des données utiles sur le bus CAN,
- la collecte 23 des données utiles circulant sur le bus CAN,
- la transmission 24 des données utiles collectées.

### 1.2.1. Réception du fichier de configuration

La première étape de la phase « en ligne » consiste à recevoir le fichier de configuration généré lors de la phase « hors ligne ». Ceci permet une adaptation automatique du procédé d'extraction de donnée.

Ainsi, au lieu d'un développement logiciel du procédé d'extraction spécifique à chaque modèle de véhicule et chaque application finale visée, le procédé d'extraction selon l'invention exploite les informations contenues dans le fichier de configuration pour permettre son paramétrage en fonction :
- du modèle de véhicule sur lequel il est mis en oeuvre et,
- de l'application finale visée.

### 1.2.2. Analyse du fichier de configuration

Une autre étape de la phase en ligne consiste à analyser les informations contenues dans le fichier de configuration reçu.

Cette analyse consiste à obtenir des critères et conditions de collectes des données utiles à partir des informations du fichier de configuration. Notamment, l'étape d'analyse peut comprendre les traitements suivants :
- identification de chaque donnée utile à collecter,
- détermination des règles de collecte associées à chaque donnée utile ; notamment :
   ∘ détermination de l'éventuel critère de périodicité d'acquisition de la donnée sur le bus CAN (i.e. collecte d'une valeur de la donnée utile considérée toutes les N valeurs), et/ou
   ∘ détermination du facteur de conversion de la valeur associée à la donnée utile considérée pour convertir cette valeur dans une unité souhaitée (i.e. kilomètres, litre, etc.),
   ∘ détermination des conditions de validité de la valeur associée à la donnée utile considérée (par exemple, la valeur doit être supérieure à une valeur seuil minimale, ou doit être inférieure à une valeur seuil maximale, ou doit être comprise entre une valeur seuil minimale et une valeur seuil maximale, etc.).

L'analyse du fichier de configuration permet de paramétrer l'étape d'extraction du procédé d'extraction.

### 1.2.3. Extraction des données utiles

Une fois le procédé d'extraction paramétré, une étape de collecte des données utiles est réalisée. Les trames circulant sur le bus de communication sont examinées et les données qu'elles contiennent sont collectées lorsqu'elles correspondent à une donnée utile du fichier de configuration et que les critères de collecte relatifs à cette donnée utile sont satisfaits.

Par exemple, pour une application « vitesse moyenne » calculant la vitesse moyenne d'un véhicule au cours d'un trajet, le fichier de configuration peut comprendre une information relative à la collecte de la donnée utile correspondant à la « vitesse de déplacement du véhicule ». Dans ce cas, le fichier de configuration peut également préciser :
- la périodicité de collecte de cette donnée,
- le facteur de conversion des valeurs associées à cette donnée,
- le critère de validité de cette donnée,
- le libellé à associer à cette donnée,
- l'identifiant de la trame contenant cette donnée, etc.

L'étape d'extraction consiste alors à :
- observer les trames de données circulant sur le bus de communication
- pour chaque trame courante circulant sur le bus, comparer l'identifiant renseigné dans le fichier de configuration à l'identifiant de la trame courante,
- si les identifiants sont identiques :
   ∘ incrémenter un compteur
   ∘ comparer la valeur du compteur à la valeur de périodicité de collecte renseignée dans le fichier de configuration,
   ∘ si ces valeurs sont identiques :
      ▪ collecter la donnée contenue dans la trame et
      ▪ remettre le compteur à zéro,
      ▪ retourner à l'étape d'observation,
   ∘ si ces valeurs sont différentes :
      ▪ ne pas collecter la donnée et
      ▪ retourner à l'étape d'observation.
- Si les identifiants sont différents :
   ∘ retourner à l'étape d'observation.

La collecte d'une donnée utile peut également être fonction d'un critère de collecte. Par exemple pour une application consistant à détecter les infractions routières des véhicules, comme les excès de vitesse d'un véhicule, la collecte de la donnée utile correspondant au paramètre « vitesse de déplacement du véhicule » peut n'être effectuée que lorsque la valeur de la donnée utile est supérieure à un seuil (par exemple 130km/h).

L'homme du métier aura compris que l'étape de collecte des données utiles est adaptative en fonction des informations contenues dans le fichier de configuration, ce qui permet une grande flexibilité du procédé d'extraction selon l'invention.

### 1.2.4. Transmission des données collectées

Une fois la collecte d'une ou plusieurs données utiles effectuée, celles-ci peuvent être transmises à un serveur distant pour la mise en oeuvre de l'application finale visée.

La transmission des données collectée peut être effectuée :
- au fur et à mesure de la collecte ou
- périodiquement ou
- sur requête.

### 1.2.5. Mise à jour du fichier de configuration

Le procédé peut également comprendre une étape de mise à jour du fichier de configuration.

Cette étape de mise à jour du fichier de configuration comprend la réception d'un nouveau fichier de configuration, l'analyse du nouveau fichier de configuration et le paramétrage du procédé en fonction du nouveau fichier de configuration.

Avantageusement, le paramétrage du procédé en fonction du nouveau fichier de configuration peut être réalisé sans nécessiter un arrêt de l'étape d'extraction de données par le procédé.

Par ailleurs, le paramétrage en fonction du nouveau fichier de configuration peut être réalisé :
- soit à la réception du nouveau fichier de configuration,
- soit ultérieurement, par exemple :
   ∘ à la réception d'une requête commandant au procédé de mettre en oeuvre le paramétrage du procédé à partir du nouveau fichier de configuration, ou encore
   ∘ lorsque la valeur de la donnée collectée ne satisfait pas une condition particulière, par exemple une condition liée au passage d'un seuil prédéterminé, ou encore une condition de validité de cette donnée.

### 2. Dispositif et système d'extraction

On va maintenant décrire un système d'extraction permettant de mettre en oeuvre le procédé d'extraction selon l'invention.

Le système d'extraction comprend un serveur distant 3 et un dispositif d'extraction 5 connecté ou intégré à un boîtier de communication 4 disposé dans le véhicule 6. L'utilisation d'un dispositif d'extraction 5 séparé du boîtier de communication 4 et connecté à celui-ci permet une mise à jour des boîtiers de communication existants présents sur les véhicules en circulation.

On notera que dans le cas où le dispositif d'extraction 5 n'est pas intégré au boîtier de communication 4, il peut être connecté au boîtier de communication 4 par tout type de liaison, comme par exemple un port série, port USB, bus I2C ou encore une liaison radio courte portée du type BlueTooth ou Zigbee.

Le serveur 3 est programmé pour mettre en oeuvre le procédé de génération d'un fichier de configuration selon l'invention, ce qui correspond à la phase hors-ligne.

En variante, cette étape de génération peut aussi être mise en oeuvre par une autre machine distante que le serveur 3. Dans ce cas, un premier serveur est en charge de la génération du fichier de configuration, un deuxième serveur est en charge de la réception des données utiles extraites par le dispositif d'extraction du boîtier 4. Dans la suite de la description, on considère un unique serveur 3.

Le dispositif d'extraction 5 permet l'extraction des données utiles à l'application finale visée. Le dispositif d'extraction 5 est programmé pour mettre en oeuvre le procédé d'extraction de la phase en ligne.

### 2.1. Serveur

Le serveur 3 comprend un transducteur 31 et une unité de traitement 32.

Le transducteur 31 permet la transmission du fichier de configuration vers le dispositif d'extraction 5, et la réception des données utiles extraites par le dispositif d'extraction 5.

L'unité de traitement 32 est programmée pour mettre en oeuvre les étapes de du procédé de génération d'un fichier de configuration correspondant à la phase « hors ligne ».

A cet effet, l'unité de traitement 32 comprend un module de génération 321 d'un fichier configuration. Ce module de génération 321 inclut notamment un module de sélection 322 de données utiles à extraire. Le module de sélection 322 est composé d'un module de choix 323 de données utiles à extraire, et d'un module d'affectation 324 de critères d'homogénéisation à ces données utiles choisies.

L'unité de traitement 32 comporte par exemple un/des ordinateur(s), un/des micro-ordinateur(s), un/des automate(s) programmable(s), ou tout type de dispositif connu de l'homme du métier.

### 2.2. Dispositif d'extraction

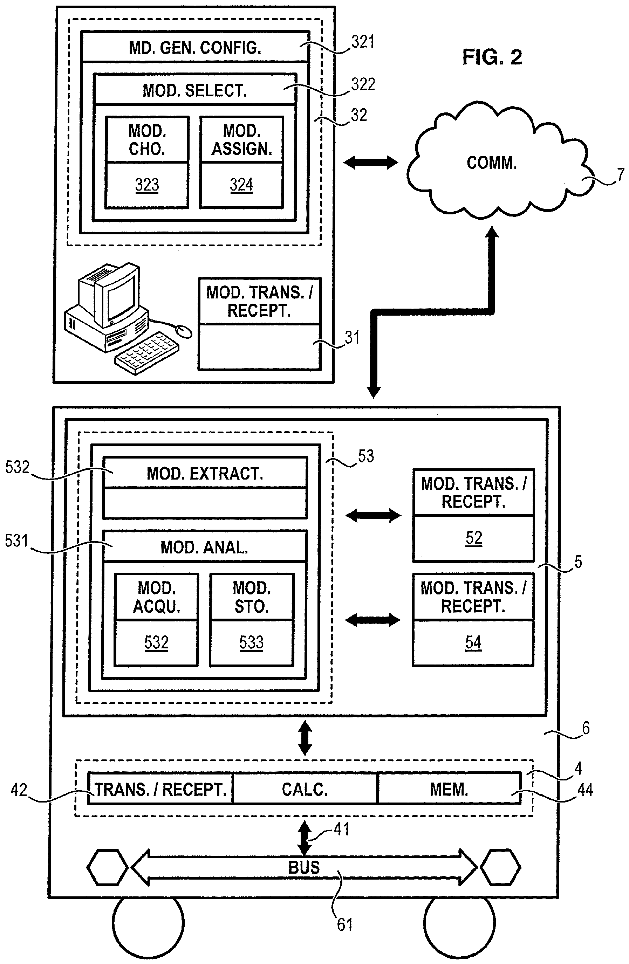

En référence à la figure 2, on a illustré un mode de réalisation du système d'extraction dans lequel le dispositif d'extraction 5 est séparé et connecté au boîtier de communication 4.

Le dispositif d'extraction 5 comprend un module de transmission/réception 52 permettant de communiquer avec le serveur 3 par l'intermédiaire d'un réseau de communication 7.

Dans l'hypothèse où le boîtier de communication 4 comprend un transducteur 42 tel qu'une antenne, le module de transmission/réception 52 peut consister en un pilote de communication programmé pour contrôler le transducteur 42 du boîtier de communication 4. Ceci permet de limiter la quantité de ressources matérielles contenues dans le dispositif d'extraction 5.

En variante, le module de transmission/réception 52 peut comprendre un transducteur tel qu'une antenne ou tout type de transducteur connu de l'homme du métier.

Le dispositif d'extraction 5 comprend également un module mémoire 54 pour le stockage :
- des données utiles extraites du bus de communication 61,
- du (ou des) fichier(s) de configuration et
- des instructions de code programme permettant la mise en oeuvre des étapes de traitement de la phase « en ligne ».

Dans l'hypothèse où le boîtier de communication 4 comprend une mémoire 44 adaptée au stockage des données utiles extraites, le module mémoire 54 du dispositif d'extraction 5 peut comprendre un pilote d'enregistrement programmé pour accéder à la mémoire 44 du boîtier de communication 4. Dans ce cas, le module mémoire 54 du dispositif d'extraction 5 commande le stockage du (ou des) fichier(s) de configuration et des données extraites dans un emplacement de la mémoire 44 du boîtier de communication 4.

En variante, le module mémoire 54 peut comprendre un support d'enregistrements tel qu'une mémoire volatile (ou « RAM », acronyme de l'expression anglo-saxonne « Random Access Memory »).

Le dispositif d'extraction 5 comprend enfin une unité de calcul 53 programmée pour mettre en oeuvre les étapes de traitement de la phase « en ligne » du procédé d'extraction.

L'unité de calcul 53 comporte :
- un module d'analyse 531 composé notamment :
   ∘ d'un module d'acquisition 532 pour l'acquisition d'une fréquence de collecte de la (ou des) donnée(s) utile(s), d'un facteur de conversion de la (ou des) donnée(s) utile(s), et/ou d'un critère de validité de la (ou des) donnée(s) utile(s),
   ∘ d'un module de stockage 533 pour stocker les informations acquises par le module d'acquisition 532, ce module de stockage pouvant être intégré ou séparé du module mémoire 54,
- un module d'extraction 532 pour extraire les données utiles.

### 2.3. Boîtier de communication

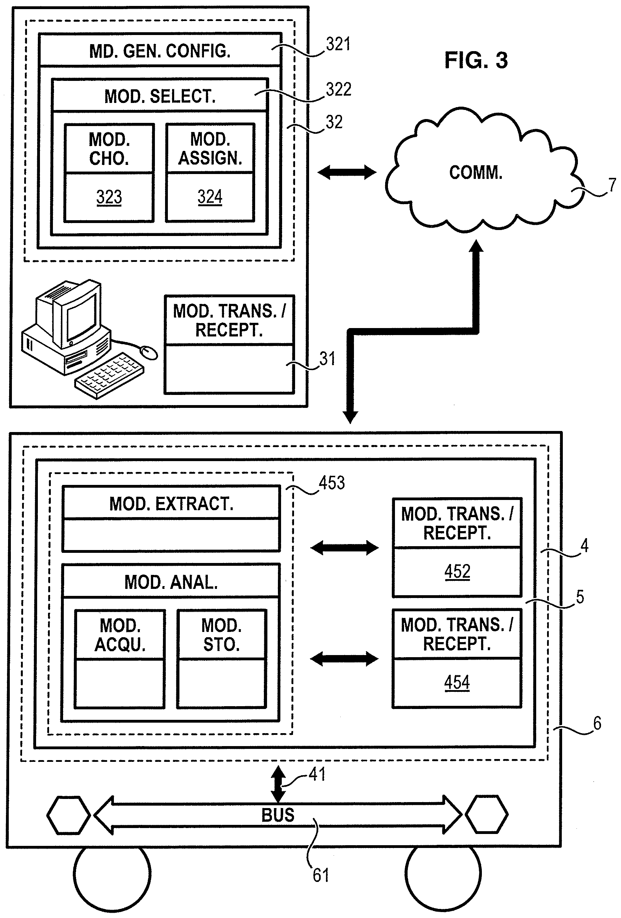

En référence à la figure 3, on a illustré un mode de réalisation du système d'extraction dans lequel le dispositif d'extraction 5 est intégré au boîtier de communication 4.

Le boîtier de communication 4 comprend un connecteur 41, un émetteur/récepteur 452, un calculateur 453 et une mémoire 454.

Le connecteur 41 permet de connecter le boîtier 4 au bus CAN 61 du véhicule 6. A titre d'exemple, il peut s'agir d'une connexion électrique, par induction ou par opto-coupleur

L'émetteur/récepteur 452 permet :
- d'envoyer les données utiles extraites et
- de recevoir le ou les fichiers de configuration transmis par le serveur 3.

Le calculateur 453 est programmé pour mettre en oeuvre les étapes de traitement de la phase « en ligne » du procédé d'extraction. Notamment, le calculateur comporte les modules du dispositif d'extraction illustré à la figure 2.

Le calculateur 453 peut comprendre un/des processeur(s), un/des microcontrôleur(s), un/des micro-ordinateur(s), un/des automate(s) programmable(s), un/des circuit(s) intégré(s) spécifique(s) d'application, ou tout autre type de circuit programmable connus de l'homme du métier.

### 2.4. Mémoire

La mémoire 454 permet le stockage des instructions de code programme permettant la mise en oeuvre des étapes de traitement de la phase « en ligne ».

Elle permet également le stockage du (ou des) fichier(s) de configuration.

La mémoire 454 permet de plus le stockage des données utiles collectées par le boîtier de communication 4.

### 2.5. Principe de fonctionnement

### 2.5.1. Côté serveur

Le principe de fonctionnement du système illustré à la figure 3 est le suivant.

Le serveur 3 reçoit un fichier descripteur par l'intermédiaire d'un réseau de communication auquel il est connecté ou encore un moyen de stockage quelconque, par exemple une clé USB. Ce fichier descripteur comprend des informations sur le format de codage des données circulant sur le bus de communication 61 du véhicule 6.

Eventuellement, le serveur 3 peut également recevoir des informations relatives à l'application finale visée pour laquelle l'extraction de données est nécessaire.

L'unité de traitement 31 effectue une analyse sémantique des informations contenues dans le fichier descripteur et génère un fichier de données extractibles.

A partir du fichier de données extractibles, le serveur 3 génère un fichier de données utiles à extraire en :
- sélectionnant parmi l'ensemble des données extractibles, les données utiles à l'application finale visée, et en
- associant des critères d'extraction à ces données utiles.

Enfin, l'unité de traitement 31 du serveur 3 produit le fichier de configuration à partir du fichier de données utiles à extraire.

Une fois le fichier de données de configuration généré, celui-ci est transmis - de préférence par communication sans fil 7 - au boîtier 4 disposé dans le véhicule 6.

### 2.5.2. Côté boîtier

### 2.5.2.1. Réception du fichier de configuration

Le boîtier 4 reçoit le fichier de configuration par l'intermédiaire de l'émetteur/récepteur 452.

La réception du fichier de configuration peut être mise en oeuvre à tout moment en fonction d'un protocole de téléchargement choisi.

Par exemple, la réception d'un fichier de configuration peut intervenir à la mise sous tension du boîtier 4, donc à chaque démarrage du véhicule 6.

En variante, la réception d'un fichier de configuration peut intervenir en cours de fonctionnement du boîtier 4, par exemple à chaque mise à jour du fichier de configuration par le serveur 3.

Par ailleurs, la réception d'un fichier de configuration peut être conditionnée ou non par l'envoie au serveur 3 d'une requête de chargement par le boîtier 4.

### 2.5.2.2. Stockage du fichier de configuration en mémoire

A la réception du fichier de configuration, le boîtier 4 stocke celui-ci dans sa mémoire 454.

Si un ancien fichier de configuration est déjà enregistré dans la mémoire 454 du boîtier 4, alors le boîtier 4 peut avantageusement stocker le nouveau fichier de configuration à un autre emplacement de la mémoire, sans effacer l'ancien fichier de configuration.

La prise en compte du nouveau fichier de configuration peut être effective immédiatement après sa réception.

La prise en compte d'un nouveau fichier de configuration peut également être différée dans le temps. Par exemple dans certaines variantes de réalisation, un nouveau fichier de configuration peut être pris en compte à la réception d'une information de commande issue du serveur 3, d'un contrôleur du véhicule 6 ou d'un terminal distant autre que le serveur 3.

Dans d'autres variantes de réalisation, un nouveau fichier de configuration peut être pris en compte lorsque la valeur d'une donnée collectée sur le bus de communication est supérieure (respectivement inférieure) à une valeur seuil contenue dans l'ancien fichier de configuration.

Dans tous les cas cette prise en compte du nouveau fichier de configuration peut se faire sans interruption de l'étape d'extraction des données par le boîtier 4. Ceci permet une adaptation dynamique de l'étape d'extraction de données par le boîtier 4.

### 2.5.2.3. Analyse du fichier de configuration

Le boîtier 4 extrait des critères et conditions de collecte à partir du fichier de configuration stocké en mémoire :
- identification de chaque donnée utile à extraire,
- récupération du critère de périodicité d'acquisition associé à chaque donnée utile à extraire,
- mise en mémoire du coefficient ou de la règle de calcul à appliquer sur la donnée utile collectée,
- acquisition des conditions de validité de la donnée utile à extraire.

Une fois l'analyse terminée, le boîtier 4 collecte les données utiles à extraire.

### 2.5.2.4. Collecte des données utiles

Le boitier 4 reçoit les trames circulant sur le bus CAN et les compare à l'ensemble des informations obtenues lors de l'analyse du fichier de configuration.

Le boîtier 4 extrait les données utiles de l'ensemble des trames circulant sur le bus CAN. Les données extraites sont transmises au serveur ou sont éventuellement stockées en mémoire préalablement à leur envoie.

### Conclusion

Le procédé d'extraction et le système d'extraction décrit ci-dessus présentent de nombreux avantages. Notamment, l'ensemble du traitement réalisé durant la phase en ligne est unique et commun à tous les modèles de véhicule, indépendamment de l'application finale visée. On en déduit que le boîtier permettant la mise en oeuvre de cette phase en ligne n'est pas spécifique à un modèle de véhicule particulier mais peut être adapté à toute marque de véhicule sans nécessiter une adaptation particulière.

Par ailleurs, la mise en oeuvre de la phase hors ligne au niveau d'un serveur distant permet de limiter la quantité de ressources matérielles nécessaire au niveau du boîtier.

Enfin l'utilisation d'un fichier de configuration pour paramétrer l'extraction des données utiles permet une grande adaptabilité du procédé d'extraction et du système associé.

En conclusion, le procédé d'extraction décrit et son système associé permettent :
- de rendre le traitement de la phase « en ligne » mis en oeuvre par le boîtier adaptable à chaque modèle de véhicule sans avoir à redévelopper un traitement (logiciel) spécifique :
   l'étape de collecte des données utiles recherchées dans le flux de données est adaptative en fonction du type de véhicule,
- de rendre le traitement de la phase « en ligne » mis en oeuvre par le boîtier adaptable à chaque application finale sans avoir à redévelopper un traitement (logiciel) spécifique :
   l'étape de collecte des données utiles recherchées dans le flux de données est adaptative en fonction des paramètres nécessaires à l'exécution de l'application finale,
- de mettre à jour dynamiquement le procédé d'extraction sans interruption de l'étape de collecte des données utiles,
- de restituer les paramètres recherchés avec des unités uniformisées quel que soit le format et le codage des données « brutes » circulant sur le bus de communication du véhicule,
- de collecter les données utiles recherchées avec une périodicité spécifique, unique et configurable pour chacune des données utiles à extraire, la fréquence de collecte d'une donnée pouvant être modifié à distance sans interruption de l'étape de collecte.

L'homme du métier aura compris que de nombreuses modifications peuvent être apportées au procédé et au système selon l'invention sans sortir matériellement des nouveaux enseignements présentés ici.

Par exemple, le procédé d'extraction et son système associé peuvent être utilisés pour collecter des données sur d'autres types de bus de communication que le bus CAN, comme par exemple des bus de type LIN, Flex-Ray, NMEA et NMEA2000, ou encore des variantes du bus CAN (bus FMS / norme J1939, norme ODB, etc.).

Par ailleurs, le procédé d'extraction peut ne pas comprendre les étapes de traitement de la phase hors ligne, notamment dans le cas où le fichier de configuration est directement fourni par le constructeur automobile.

Il est donc bien évident que les exemples qui viennent d'être donnés ne sont que des illustrations particulières en aucun cas limitatives.

En particulier, l'invention n'est pas limitée à l'extraction de données transmises par des bus de communication du domaine automobile. Des bus de communication peuvent être utilisés dans d'autres domaines, par exemple ceux de la robotique industrielle, de l'aéronautique ou encore du transport maritime.

### Références :

1 : Phase hors ligne,
2 : Phase en ligne,
11 : Analyse des données circulant sur le bus,
12 : Sélection de données utiles à l'application finale visée,
13 : Génération d'un fichier de configuration,
21 : Réception du fichier de configuration,
22 : Analyse du fichier de configuration,
23 : Collecte des données utiles
24 : Transmission des données utiles collectées.

## Revendications

1. Procédé d'extraction d'au moins une donnée utile circulant sur un bus de communication (61) d'une machine (6), ladite au moins une donnée utile étant représentative d'un paramètre de la machine, le procédé comprenant les étapes suivantes :
- réception (21) d'un fichier de configuration incluant des informations relatives au codage de ladite au moins une donnée utile à extraire,
- analyse (22) des informations contenues dans le fichier de configuration pour permettre l'identification de ladite au moins une donnée utile à extraire parmi l'ensemble des données circulant sur le bus de communication,
- collecte (23) de ladite au moins une donnée utile identifiée, et
- transmission (24) de ladite au moins une donnée utile collectée à un serveur (3) distant de la machine,
le procédé étant de plus **caractérisé en ce que** l'étape d'analyse (22) comprend l'acquisition d'un facteur de conversion de ladite au moins une donnée utile, l'étape de collecte (23) comprenant l'application dudit facteur de conversion à ladite au moins une donnée utile pour convertir ladite donnée dans une unité prédéterminée représentative d'une grandeur physique.

2. Procédé d'extraction selon la revendication 1, dans lequel l'étape d'analyse (22) comprend l'acquisition d'une fréquence de collecte de ladite au moins une donnée utile, l'étape de collecte comprenant la collecte de ladite au moins une donnée utile à ladite fréquence de collecte.

3. Procédé d'extraction selon l'une quelconque des revendications 1 à 2, dans lequel l'étape d'analyse (22) comprend l'acquisition d'un critère de validité de ladite au moins une donnée utile, l'étape de collecte comprenant la comparaison de ladite donnée utile au critère de validité.

4. Procédé d'extraction selon l'une quelconque des revendications 1 à 3, dans lequel l'étape d'analyse (22) comprend :
- l'acquisition d'une pluralité de paramètres initiaux pour la configuration de l'étape de collecte, et
- le stockage desdits paramètres initiaux dans un emplacement mémoire local.

5. Procédé d'extraction selon la revendication 4, lequel comprend en outre la réception d'un nouveau fichier de configuration pour mettre à jour la configuration de l'étape de collecte (23), et l'analyse du nouveau fichier de configuration, l'étape de collecte (23) de donnée à partir du fichier de configuration initial étant exécutée en parallèle de l'étape d'analyse (22) du nouveau fichier de configuration.

6. Procédé d'extraction selon l'une quelconque des revendications 1 à 5, dans lequel le fichier de configuration incluant des informations relatives au codage de ladite au moins une donnée utile à extraire a été généré par un serveur (3) de génération selon une étape de génération comprenant une sous-étape de création (1) du fichier de configuration à partir d'un fichier de données extractibles circulant sur le bus de communication (61), ladite sous-étape de création (1) du fichier de configuration comprenant la sélection (12) de ladite au moins une donnée utile à extraire parmi l'ensemble des données extractibles du fichier de données extractibles.

7. Procédé d'extraction selon la revendication 6, dans lequel la sous-étape de sélection (12) comprend :
- le choix de ladite au moins une donnée utile à extraire parmi l'ensemble des données extractibles du fichier de données extractibles et
- l'affectation à ladite au moins une donnée utile choisie de critères d'homogénéisation pour standardiser le format de codage de ladite au moins une donnée utile choisie.

8. Dispositif (5) d'extraction d'au moins une donnée utile circulant sur un bus de communication (61) d'une machine (6), ladite au moins une donnée utile étant représentative d'un paramètre de la machine, le dispositif (5) étant apte à mettre en oeuvre les modules suivants :
- réception d'un fichier de configuration incluant des informations relatives au codage de ladite au moins une donnée utile à extraire,
- analyse des informations contenues dans le fichier de configuration pour permettre l'identification de ladite au moins une donnée utile à extraire parmi l'ensemble des données circulant sur le bus de communication,
- collecte de ladite au moins une donnée utile identifiée,
- transmission de ladite au moins une donnée utile collectée à un serveur (3) distant de la machine.
le dispositif (5) étant de plus **caractérisé en ce que** qu'il est apte à mettre en oeuvre le module d'analyse qui comprend l'acquisition d'un facteur de conversion de ladite au moins une donnée utile, l'étape de collecte comprenant l'application dudit facteur de conversion à ladite au moins une donnée utile pour convertir ladite donnée dans une unité prédéterminée représentative d'une grandeur physique.

9. Boîtier de communication (4), apte à être connecté au bus de communication (61) d'une machine (6), **caractérisé en ce qu'**il comprend un dispositif d'extraction (5) selon la revendication 8.

10. Système d'extraction d'au moins une donnée utile circulant sur un bus de communication (61) d'une machine (6), chaque donnée utile étant représentative d'un paramètre de la machine (6), **caractérisé en ce que** le système comprend :
- un boîtier de communication (4) connecté au bus de communication (61), ledit boîtier (4) conforme à la revendication 9, et
- un serveur (3) de génération d'un fichier de configuration incluant des informations relatives au codage de ladite au moins une donnée utile à extraire.

11. Serveur (3) de génération d'un fichier de configuration incluant des informations relatives au codage d'au moins une donnée utile à extraire, comprenant en outre une unité de traitement (32) programmée pour mettre en oeuvre les étapes du procédé de génération selon l'une des revendications 6 ou 7.

12. Serveur (3) de génération selon la revendication 11, lequel comprend en outre un transducteur (31) pour transmettre le fichier de configuration généré au dispositif d'extraction.

13. Produit programme d'ordinateur comportant des instructions pour la mise en oeuvre des étapes du procédé d'extraction selon l'une des revendications 1 à 7 lorsqu'il est exécuté par un processeur.

## Patentansprüche

1. Verfahren zur Extraktion mindestens eines nützlichen Datums, das auf einem Kommunikationsbus (61) einer Maschine (6) zirkuliert, wobei das mindestens eine nützliche Datum für einen Parameter der Maschine repräsentativ ist, wobei das Verfahren die folgenden Schritte umfasst:
- Empfang (21) einer Konfigurationsdatei, die Informationen zur Codierung des mindestens einen zu extrahierenden nützlichen Datums einschließt,
- Analyse (22) der in der Konfigurationsdatei enthaltenen Informationen, um die Identifikation des mindestens einen zu extrahierenden nützlichen Datums unter der Gesamtheit der auf dem Kommunikationsbus zirkulierenden Daten zu ermöglichen,
- Sammeln (23) des mindestens einen identifizierten nützlichen Datums, und
- Übertragung (24) des mindestens einen gesammelten nützlichen Datums an einen von der Maschine entfernten Server (3),
wobei das Verfahren ferner **dadurch gekennzeichnet ist, dass** der Analyseschritt (22) die Erfassung eines Umwandlungsfaktors des mindestens einen nützlichen Datums umfasst, wobei der Sammelschritt (23) die Anwendung des Umwandlungsfaktors an dem mindestens einen nützlichen Datum umfasst, um das Datum in eine vorbestimmte Einheit, die für eine physikalische Größe repräsentativ ist, umzuwandeln.

2. Extraktionsverfahren nach Anspruch 1, bei dem der Analyseschritt (22) die Erfassung einer Sammelfrequenz des mindestens einen nützlichen Datums umfasst, wobei der Sammelschritt das Sammeln des mindestens einen nützlichen Datums mit der Sammelfrequenz umfasst.

3. Extraktionsverfahren nach einem der Ansprüche 1 bis 2, bei dem der Analyseschritt (22) die Erfassung eines Gültigkeitskriteriums des mindestens einen nützlichen Datums umfasst, wobei der Sammelschritt den Vergleich des nützlichen Datums mit dem Gültigkeitskriterium umfasst.

4. Extraktionsverfahren nach einem der Ansprüche 1 bis 3, bei dem der Analyseschritt (22) umfasst:
- die Erfassung einer Vielzahl von Ausgangsparametern für die Konfiguration des Sammelschrittes, und
- die Speicherung der Ausgangsparameter an einer lokalen Speicherstelle.

5. Extraktionsverfahren nach Anspruch 4, das ferner den Empfang einer neuen Konfigurationsdatei zur Aktualisierung der Konfiguration des Sammelschrittes (23) und die Analyse der neuen Konfigurationsdatei umfasst, wobei der Sammelschritt (23) eines Datums aus der Ausgangskonfigurationsdatei parallel mit dem Analyseschritt (22) der neuen Konfigurationsdatei erfolgt.

6. Extraktionsverfahren nach einem der Ansprüche 1 bis 5, bei dem die Konfigurationsdatei, die Informationen zur Codierung des mindestens einen zu extrahierenden nützlichen Datums einschließt, von einem Erzeugungsserver (3) nach einem Erzeugungsschritt erzeugt wurde, umfassend einen Unterschritt der Erzeugung (1) der Konfigurationsdatei aus einer Datei von extrahierbaren Daten, die auf dem Kommunikationsbus (61) zirkulieren, wobei der Unterschritt der Erzeugung (1) der Konfigurationsdatei die Auswahl (12) des mindestens einen zu extrahierenden nützlichen Datums unter der Gesamtheit der extrahierbaren Daten der Datei von extrahierbaren Daten umfasst.

7. Extraktionsverfahren nach Anspruch 6, bei dem der Unterschritt (12) der Auswahl umfasst:
- die Wahl des mindestens einen zu extrahierenden nützlichen Datums unter der Gesamtheit der extrahierbaren Daten der Datei von extrahierbaren Daten, und
- die Zuteilung von Homogenisierungskriterien zu dem mindestens einen gewählten nützlichen Datum, um das Codierungsformat des mindestens einen gewählten nützlichen Datums zu standardisieren.

8. Vorrichtung (5) zur Extraktion mindestens eines nützlichen Datums, das auf einem Kommunikationsbus (61) einer Maschine (6) zirkuliert, wobei das mindestens eine nützliche Datum für einen Parameter der Maschine repräsentativ ist, wobei die Vorrichtung (5) geeignet ist, die folgenden Module einzusetzen:
- Empfang einer Konfigurationsdatei, die Informationen zur Codierung des mindestens einen zu extrahierenden nützlichen Datums einschließt,
- Analyse der in der Konfigurationsdatei enthaltenen Informationen, um die Identifikation des mindestens einen zu extrahierenden nützlichen Datums unter der Gesamtheit der auf dem Kommunikationsbus zirkulierenden Daten zu ermöglichen,
- Sammeln des mindestens einen identifizierten nützlichen Datums,
- Übertragung des mindestens einen gesammelten nützlichen Datums an einen von der Maschine entfernten Server (3),
wobei die Vorrichtung (5) ferner **dadurch gekennzeichnet ist, dass** sie geeignet ist, das Analysemodul einzusetzen, das die Erfassung eines Umwandlungsfaktors des mindestens einen nützlichen Datums umfasst, wobei der Sammelschritt die Anwendung des Umwandlungsfaktors an dem mindestens einen nützlichen Datum umfasst, um das Datum in eine vorbestimmte Einheit, die für eine physikalische Größe repräsentativ ist, umzuwandeln.

9. Kommunikationsgehäuse (4), das geeignet ist, an den Kommunikationsbus (61) einer Maschine (6) angeschlossen zu werden, **dadurch gekennzeichnet, dass** es eine Extraktionsvorrichtung (5) nach Anspruch 8 umfasst.

10. System zur Extraktion mindestens eines nützlichen Datums, das auf einem Kommunikationsbus (61) einer Maschine (6) zirkuliert, wobei jedes Datum für einen Parameter der Maschine (6) repräsentativ ist, **dadurch gekennzeichnet, dass** das System umfasst:
- ein Kommunikationsgehäuse (4), das an den Kommunikationsbus (61) angeschlossen ist, wobei das Gehäuse (4) dem Anspruch 9 entspricht, und
- einen Server (3) zur Erzeugung einer Konfigurationsdatei, die Informationen zur Codierung des mindestens einen zu extrahierenden nützlichen Datums einschließt.

11. Server (3) zur Erzeugung einer Konfigurationsdatei, die Informationen zur Codierung mindestens eines zu extrahierenden nützlichen Datums umfasst, ferner umfassend eine Bearbeitungseinheit (32), die programmiert ist, die Schritt des Erzeugungsverfahrens nach einem der Ansprüche 6 oder 7 einzusetzen.

12. Erzeugungsserver (3) nach Anspruch 11, der ferner einen Wandler (31) umfasst, um die erzeugte Konfigurationsdatei an die Extraktionsvorrichtung zu übertragen.

13. Computerprogrammprodukt, umfassend Instruktionen für den Einsatz der Schritte des Extraktionsverfahrens nach einem der Ansprüche 1 bis 7, wenn es von einem Prozessor ausgeführt wird.

## Claims

1. Method for extracting at least one useful data item circulating on a communication bus (61) of a machine (6), said at least one useful data item being representative of a parameter of the machine, the method comprising the following steps:
- reception (21) of a configuration file including information items relating to the coding of said at least one useful data item to be extracted,
- analysis (22) of the information items contained in the configuration file so as to allow the identification of said at least one useful data item to be extracted from among the set of the data circulating on the communication bus,
- collection (23) of said at least one identified useful data item, and
- transmission (24) of said at least one collected useful data item to a server (3) remote from the machine,
the method being moreover **characterized in that** the analysis step (22) comprises the acquisition of a factor of conversion of said at least one useful data item, the collection step (23) comprising the application of said conversion factor to said at least one useful data item so as to convert said data item into a predetermined unit representative of a physical quantity.

2. Method of extraction according to Claim 1, in which the analysis step (22) comprises the acquisition of a frequency of collection of said at least one useful data item, the collection step comprising the collection of said at least one useful data item at said collection frequency.

3. Method of extraction according to either one of Claims 1 to 2, in which the analysis step (22) comprises the acquisition of a validity criterion in respect of said at least one useful data item, the collection step comprising the comparison of said useful data item with the validity criterion.

4. Method of extraction according to any one of Claims 1 to 3, in which the analysis step (22) comprises:
- the acquisition of a plurality of initial parameters for the configuration of the collection step, and
- the storage of said initial parameters in a local memory location.

5. Method of extraction according to Claim 4, which furthermore comprises the reception of a new configuration file so as to update the configuration of the collection step (23), and the analysis of the new configuration file, the step (23) of data item collection on the basis of the initial configuration file being executed in parallel with the step (22) of analysis of the new configuration file.

6. Method of extraction according to any one of Claims 1 to 5, in which the configuration file including information items relating to the coding of said at least one useful data item to be extracted has been generated by a generating server (3) according to a generating step comprising a sub-step (1) of creating the configuration file on the basis of a file of extractable data circulating on the communication bus (61), said sub-step (1) of creating the configuration file comprising the selecting (12) of said at least one useful data item to be extracted from among the set of the extractable data of the file of extractable data.

7. Method of extraction according to Claim 6,
in which the selecting sub-step (12) comprises:
- the choosing of said at least one useful data item to be extracted from among the set of the extractable data of the file of extractable data and
- the assigning to said at least one chosen useful data item of homogenization criteria so as to standardize the coding format of said at least one chosen useful data item.

8. Device (5) for extracting at least one useful data item circulating on a communication bus (61) of a machine (6), said at least one useful data item being representative of a parameter of the machine, the device (5) being able to implement the following modules:
- reception of a configuration file including information items relating to the coding of said at least one useful data item to be extracted,
- analysis of the information items contained in the configuration file so as to allow the identification of said at least one useful data item to be extracted from among the set of the data circulating on the communication bus,
- collection of said at least one identified useful data item,
- transmission of said at least one collected useful data item to a server (3) remote from the machine,
the device (5) being moreover **characterized in that** it is able to implement the analysis module which comprises the acquisition of a factor of conversion of said at least one useful data item, the collection step comprising the application of said conversion factor to said at least one useful data item so as to convert said data item into a predetermined unit representative of a physical quantity.

9. Communication housing (4), able to be connected to the communication bus (61) of a machine (6), **characterized in that** it comprises an extraction device (5) according to Claim 8.

10. System for extracting at least one useful data item circulating on a communication bus (61) of a machine (6), each useful data item being representative of a parameter of the machine (6), **characterized in that** the system comprises:
- a communication housing (4) connected to the communication bus (61), said housing (4) complying with Claim 9, and
- a server (3) for generating a configuration file including information items relating to the coding of said at least one useful data item to be extracted.

11. Server (3) for generating a configuration file including information items relating to the coding of at least one useful data item to be extracted,
further comprising a processing unit (32) programmed to implement the steps of the generation method according to one of Claims 6 and 7.

12. Generating server (3) according to Claim 11, which furthermore comprises a transducer (31) for transmitting the configuration file generated to the extraction device.

13. Computer program product comprising instructions for the implementation of the steps of the method of extraction according to one of Claims 1 to 7 when it is executed by a processor.
